# EUROPEAN PATENT SPECIFICATION

(11) **EP 1 872 651 B1**
(45) Date of publication and mention of the grant of the patent: **14.11.2012**
(21) Application number: 07075541.8
(22) Date of filing: 29.06.2007
(51) Int. Cl.: A01G 9/00

(54) **System and method for growing crops**
System und Verfahren zur Züchtung von Kulturen
Système et procédé pour cultiver des cultures

(30) Priority: 29.06.2006 NL 1032088
(43) Date of publication of application: 02.01.2008
(73) Proprietor: Speravimus Holding B.V., 3255 LB Oude-Tonge (NL)
(72) Inventor: Struik, Arie Eliza, 3255 LB Oude-Tonge (NL)
(74) Representative: Seitz, Holger Fritz Karl

(56) References cited:
- WO-A-01/32000
- DE-A1- 3 734 934
- JP-A- 2003 310 054
- JP-A- 2004 065 265
- US-A1- 2002 010 516

## Description

The invention relates to a system for growing a crop. The invention also relates to a method for growing a crop.

European Patent Application 0 963 693 discloses a method for a part of a process for growing chicory. According to the method, a temperature and an air humidity are varied according to a predetermined profile for a predetermined period of time. Although such a method offers the possibility of varying a condition such as a temperature or an air humidity in a predetermined manner, this method does not offer any possibilities for taking into consideration all kinds of other variables such as, for example, a type of crop, a variety of the crop concerned, soil characteristics, additional influences such as, for example, weather influences, seasonal influences, desired quality characteristics of the crop to be grown etc. Nor does this method offer any possibility for taking into consideration various requirements that a consumer may set for the produce for the purpose of different proposed uses for the produce.

International Patent Application 01/32000 discloses an apparatus for growing a plant, comprising monitoring means, comparison means and communication means for communicating to a user the adequacy of the environmental conditions. The species of plant to be grown may be selectable, wherein the apparatus is responsive to the selection of species to select a criterion of adequacy appropriate thereto. The apparatus may be operative to interrogate a user to learn the actual state of development of the plant or to interrogate a user concerning aliments and degenerative conditions in the plant.

Japanese Patent Application 2004 065265 discloses a system to cultivate plants by automatically controlling the culture circumstances, a fertilizer concentration and the like. The system stores values about vegetable kind, growing conditions and a growing period in a first storage. In a second storage preset values concerning culture fluid concentration, pH-values, fertilizer concentration and temperature conditions are stored. The system compares the preset values with measured values and takes action on the basis of the comparison.

An object of the invention is to provide a method and system for growing crops that provides instructions during the growing of the crop, in order to obtain a produce that meets the previously set requirements for a proposed use.

In order to achieve this object, the system for growing a crop comprises input means for inputting data relating to the growing of the crop, a database in which to store input data, processing means for generating an instruction on the basis of at least a part of the stored data and/or the input data, and output means for providing the instruction to a user of the system, the processing means being arranged to:
a) receive a growing objective for the crop input by the user by means of the input means;
b) determine a criterion for growing the crop on the basis of at least the growing objective input in step a) and data stored in the database;
c) receive data input by means of the input means relating to the state of the crop and/or the piece of land on which the crop is to be grown;
d) determine an instruction for achieving the criterion on the basis of the data stored in the database and the data input in step c); and
e) provide the instruction by means of the output means.

On the basis of the growing objective input by the user, such as a quantity of crop, a crop size, a bulb size, a fruit size, a proposed use, a harvesting date, a shelf life date, a flavour, a sugar content, a ripeness, a hardness, a colour, a chemical composition, food safety, environmental requirements etc., the system, on the basis of, for example, historic data relating to the crop stored in the database, is able to determine one or more criteria for the growth of the crop. Generally speaking, the growing objective can relate to bulbs, tubers, roots, fruits, seeds etc. The criterion can comprise, for example, a growing profile of the crop over time. It is preferable for this purpose for data relating to a growth of the crop concerned and/or varieties of that crop to be stored in the database. The data stored in the database (such as a memory) will be discussed further below. The criterion can be determined by the system from, for example, the growing objective and the data stored in the database, for example by comparison, interpolation, extrapolation etc. on the basis of the historic data. In fact, this can be a so-called expert system which, on the basis of the data entered in the system, takes a decision on a new situation that has been input in the system. By means of the input means, a datum can also be input relating to the state of the crop and/or the piece of land on which the crop is being or is to be grown. It is therefore possible, for example, before the start of the growing process to input a state of the piece of land, meteorological conditions or a weather forecast, and during the growing of the crop to input a variety of measured data relating to, for example, the crop and its development, a state of the piece of land and/or meteorological conditions or forecast data. On the basis of the input data, the system now determines an instruction for the user, which serves to instruct the user to perform or omit an action that contributes to achieving the criterion determined earlier. For example, it is possible, for the criterion, as stated above, to comprise a growing profile, and for the input data to relate to a size of the crop, a state of the piece of land and meteorological conditions, in which case the system, on the basis of these data and the historic data stored in the database, arrives at an instruction for the user. This can be carried out by the system, for example by comparing the input data with the data stored in the database and by this means determining, for example, whether the size of the crop meets the criteria set according to the growing profile, whether the meteorological conditions and/or soil conditions show desired values for promoting a further development of the crop according to the desired profile etc. For example, it is possible, for the system to provide instructions to irrigate, fertilize or perform any other action in order to achieve thereby a development of the crop according to the growing profile. The instruction is then provided to the user by means of the output means of the system (for example a screen, mobile telephone, printer etc.).

In the context of this document the term growing should be understood to mean any activity that contributes to the development of the crop, including, for example, cultivating the soil, pest and weed control, irrigation, fertilizing or another application of substances to the crop, but not restricted to these activities.

In fact, an iterative process is put into operation in this way, in which process a current situation and data stored in the database are taken into consideration and an instruction is determined for taking an action by means of which the criterion set is achieved. The criterion (which can, of course, also comprise a series of criteria) is determined here on the basis of a growing objective, in other words a criterion that can be set for a crop for the purpose of a mechanical factory processing in, for example, a canning industry, can clearly differ here from a criterion that is set for another purpose, for example achieving a quality for the purpose of selling in a supermarket, a quality with a longer shelf life for export, or a first-class quality for selling through a greengrocer. With regard to the growing objective, in order to meet the set requirements, it is necessary here to take into consideration not just appearance characteristics or other objective criteria such as shelf life alone, but it can be equally important to consider criteria which, although they are measurable, are less objective criteria, such as flavour. For example, it is conceivable that for a purpose where flavour plays a prominent part, fertilizer application, irrigation and/or a time of harvesting need to be determined differently from when it is a case of a purpose for which in particular a low cost, and therefore, for example, a high yield per hectare, play a prominent part, such as, for example, for mechanical processing of the crop, or other industrial applications, where flavour will play a slightly less prominent part than a yield or a uniform size development of the crop for the sake of optimum handling or other conceivable parameters.

The growing profile can comprise a continuous or periodic profile, but it is also possible for one or more times to be laid down in the growing profile, for example dates, by which, for example, a certain development process of the crop must be completed. For example, it is possible for the growing profile to comprise a growth phase date, which means that around that date the crop needs to pass on from a development phase, in which the crop develops from, for example, seed material or planting material, to a growth phase, in which growth of the crop is evident. It is also possible for the growing profile to comprise a finishing time, for example a finishing phase date, around which date the crop has to pass from the growing phase to a finishing phase, in other words to a phase in which the crop achieves full growth, for example in which fruits, tubers or other usable parts of the plant to be harvested must achieve full growth.

The growing profile can be determined by, for example, the processing unit, on the basis of historic data stored in the database relating to a growth of the crop. For example, it is possible for growth of the crop to be stored in the system for some time, for example a number of years, for example for a large number of pieces of land, users etc., measured data such as soil analysis data, growth of the plant, meteorological data and actions performed during the cultivation being, of course, also stored in the database. On the basis of these data, with a suitable processing a desired growing profile can be set up, which can be dependent, for example, upon the desired growing objective. The growing profile could, for example, be determined by means of historic data, but it is preferably, in addition to or instead of these, by selection. In order to achieve a growing profile or another criterion for a particular growing objective, it is possible, for example, first to select from the data in the database a subset of cases in which an end result that has met the desired growing objective has been achieved. By then, on the basis of these data, determining criteria such as a growing profile and/or on the basis of these data determining instructions for achieving the criterion, it is ensured that the criterion and the instructions are as much in line as possible with the purpose to be achieved. The historic data stored in the database can also contain, in addition to or instead of actual measured data, notional data which are not based, or are only partially based, on an actual situation, but which, for example, are derived from experiments, extrapolations of actual data, estimates on the basis of experience etc.

For example, the data stored in the database can contain data relating to:
the growth of the crop,
growing different varieties of the crop,
a soil type,
a soil analysis,
crops grown in previous times on a piece of land,
a fertilizer application on pieces of land on which the crop has been grown,
a weather condition,
instructions provided for achieving the criteria, and
an observance of the instructions provided.

Of course, many other examples of data are possible, including a soil fertility number, which indicates, for example, a total quantity of available nitrogen, a fertilizer application (chemical or organic), a decontamination of the soil, a ploughing or other profiling measures, a height of the piece of land above sea level etc.

The system described here is not only capable of providing instructions relating to actions for achieving the criterion, and consequently the marketing purpose, but in addition it is also possible for the system, on the basis of, for example, a soil analysis and, for example, the data stored in the database, to provide a recommendation concerning a variety of the crop or type of crop or suitable seed merchant, or anything else that is suitable for the piece of land concerned. In that case, for example, soil analysis data and possibly meteorological data (e.g. online) can be input, a marketing purpose can be input in the system, and by means of, for example, comparison or success percentages from the past, the system can provide a recommendation concerning suitability of the crop concerned, or the envisaged variety of that crop, for the marketing purpose concerned, or on the basis of the input data relating to the piece of land the system can provide one or more suggestions for a variety, seed merchant etc., in the case of which, for example, it is clear from historic data that with such seed material (or other starting material such as bulbs, tubers, roots, planting material etc.) or with such a variety for the same piece of land or a comparable piece of land the chance of achieving a result that meets the desired marketing purpose is as great as possible.

As stated earlier, the system can be iterative, in other words, for example, the steps c), d) and e) (indicated above), and also the further preferred embodiments and variants of these, can be repeated during the cultivation process, which means, for example, during growth of the crop. It is also possible for these steps to be repeated, for example, after harvesting of the crop, for example in order to input a shelf life of the crop in the system, or in order to input a waste percentage during a processing operation, for the purpose of also inputting a suitability of the crop for the envisaged purpose in the system. This further increases predictability of the system, since in this way it can also be determined whether the envisaged characteristics for the set marketing purpose can actually also be achieved. In addition, on the basis of such data, the system can adjust criteria for future growing processes. For example, in the event of it becoming clear that a cultivated crop is still not entirely meeting an envisaged shelf life, it is possible, for example, by means of selection from the stored results in the database, for the system to select the most suitable conditions for achieving the set characteristics such as, for example, shelf life. In addition, many other mechanisms are, of course, possible in such a situation. For example, on the basis of extrapolation or on the basis of experience of a user, a change can be made in the criteria in order better to meet the characteristics required for the growing objective concerned.

The criterion can comprise a multiplicity of parameters. A number of examples of such parameters are one or more of the following: a colour of at least a part of the crop, a number of leaves per plant, a leaf length, a leaf mass, a plant mass, a bulb weight, a bulb diameter, a number of roots, a root colour, a root mass, a level of longest vital leaves, youngest developed leaf, a number of leafless coats, a number of leaf-bearing coats, a number of fruits, a number of spikes, a fruit mass, a spike mass, a fruit size, a blossom set, and a spike size. Of course, the criteria can differ per crop. For example, it is possible for a suitable number of criteria to be selected by an operator and input in the system for a particular crop by the operator by means of the input means. The criteria can, of course, comprise not just a single value or a value at a particular time, but it is, of course, also possible for a profile of one or more of the criteria over time or a certain tolerance band, for example in relation to time, to be provided.

In a preferred embodiment, the system can also be used for controlling sowing, planting etc. of the crop. In that case the instruction can comprise one or more of the following: a sowing instruction, a planting instruction and, for example, an irrigation instruction for a period of several days, for example four days after sowing, planting or the like. It is therefore possible for the system, on the basis of, for example, historic data input in the database relating to sowing, planting etc. and, for example, metrological data, soil analysis data, irrigation data, fertilizer application data etc., to determine a desired time of sowing, planting etc. and also to provide other instructions on it, such as a desired spray irrigation or watering, premature fertilizer application, soil cultivation operations etc. This means that already at such an early phase of the growing process the system can determine the best conditions for sowing, planting etc. in order to achieve the set purpose. A quantity of seed material or planting material per unit surface area or linear metre etc. can be indicated, it being possible to relate this quantity, for example, to the marketing purpose. If, e.g., for a marketing purpose large plants or large fruits are required, it is recommended that less seed material or planting material be used, so that more space is available for an individual plant.

The soil analysis data, as can be input, for example, in step c) in a preferred embodiment can comprise one or more of, for example, the following: a temperature, a moisture content, a texture, a structure, a chemical main and trace elements content, a carbon to nitrogen ratio, and a moisture balance between a quantity of supplied moisture and evaporated (or otherwise lost) moisture.

If the soil analysis data comprises a fertilizer content, such as, for example, a nitrogen content, in a preferred embodiment the processing unit can determine a fertilizer application action on the basis of the growing objective, the fertilizer content and historic data stored in the database. It is therefore possible to apply the correct amount of fertilizer, the system determining a desired total quantity of fertilizer on the basis of the growing objective, for example based on historic data, but this is, of course, also possible on the basis of a theoretical model relating to the growth of the plant and the fertilizers required for the purpose. With a total determined quantity of fertilizer and a fertilizer content already present in the soil, a fertilizer application instruction can be determined as the difference between the two. Such a fertilizer application instruction can comprise an instruction for an initial fertilizer application, an instruction for a fertilizer application around a later date during the growing of the crop, such as, for example, the growth phase date and the finishing phase date. In this way it is then possible, for example, each time that the crop passes on to the next growth stage to apply a desired quantity of fertilizer that is suitable for the stage concerned, for example the growth period or the finishing period.

The processing unit preferably determines the fertilizer application instruction here by determining from the soil analysis data a total available nitrogen content, from historic soil analysis data and/or fertilizer application data and the growing objective a desired total quantity of available nitrogen, and determining a fertilizer application instruction from the difference between the desired total quantity of available nitrogen and the soil analysis data.

A measured quantity of nutrients for the crop is therefore determined by determining a desired total quantity of available nutrient material (such as nitrogen) on the basis of, for example, the growing objective and historic soil analysis data, historic fertilizer application data etc. and then determining a difference between such a desired total quantity of nitrogen and a total quantity of nitrogen present in the soil according to the soil analysis. Of course, this mechanism is also applicable for nutrient materials other than nitrogen, such as, for example, other main elements such as phosphorus, potassium or magnesium, and also for one or more trace elements. Determining a total quantity of available nitrogen in the soil and on the basis of this determining a fertilizer application recommendation ensures that the most suitable fertilizer application instruction possible is provided, since it means that in fact all sources available in practice for the substance concerned, such as nitrogen, are taken into consideration.

The initial fertilizer application here can preferably comprise a predetermined part of the difference between the desired total quantity of available nitrogen and the total content of available nitrogen, so that the fertilizer can be applied in phases, for example a part as initial fertilizer application at the time of or before sowing, planting etc. and one or more fertilizer applications at around predetermined times, preferably a time at which the crop is passing from one growth phase to the next growth phase, for example the transition from the development phase to the growth phase, or the transition from the growth phase to the finishing phase, so that a measured quantity of fertilizer is always achieved for the phase concerned, and consequently the optimum availability of nutrients in the soil is achieved for the phase concerned.

In order to ensure, for example, that a criterion in the form of, for example, a growth curve will continue, a growth stimulator, a growth inhibitor (also known as a growth retarder), or a combination of these, can be used. In the event of growth being below a desired growth profile, or in the event of it threatening to do so, an instruction can be provided by the system to apply a growth stimulator such as, for example, an amide nitrogen, more preferably urea, while in the event of the criterion according to the growth profile being exceeded or threatening to be exceeded, an instruction to apply a growth inhibitor could be provided; such a growth inhibitor can be, for example, a magnesium sulphate. By applying such a growth inhibitor, it is possible, for example, to temper growth of the crop slightly, while at the same time an effect of strengthening of the crop generally occurs. It is also possible to apply a combination of a growth stimulator and growth inhibitor, or at least for the system to provide an instruction for this, so as both to stimulate growth of the crop and also to promote strength. Such an instruction could be provided, for example, where on the basis of the growth curve a growth of the crop is desired, while at the same time on the basis of other measured data it is clear that strength of the crop needs to be promoted. The application of a growth stimulator or a growth inhibitor is preferably carried out on the basis of a datum input in the system relating to the plant balance. The term plant balance can be understood here as meaning a ratio between a total weight of a plant of the crop concerned and a weight of a desired part (such as a bulb, fruit or other usable part)of it. On the basis of at least this plant balance, and the growing profile, the processing unit can give an instruction to apply a growth stimulator if the plant balance is below a desired value, and to apply a growth inhibitor if the plant balance is above a desired value.

When determining a quantity of growth stimulator or growth inhibitor, the following factors, for example, can be taken into account: the plant balance, the meteorological conditions, a time in the season, a soil analysis etc. Such criteria can also be taken into consideration when determining a follow-up fertilizer application, e.g. around the time of the growth phase date and/or finishing phase date.

The growth inhibitor can in general comprise one or more elements that are beneficial to plants and have a retarding effect on cell extension. The application of a growth inhibitor and a growth stimulator can be carried out, for example, if cell extension and also strength need to be promoted.

The datum input in step c) in a preferred embodiment comprises a plant balance, and if a predetermined value of the plant balance is exceeded, the processing unit then provides an instruction to apply an inhibitor. The inhibitor mentioned here can comprise, for example, a sprouting dormancy inhibitor. By in this way determining an instruction to apply an inhibitor, it can be ensured that such an inhibitor is applied at the correct, in other words predetermined, value of the plant balance, so that premature application, and consequently actual slowing of a possible yield of the crop, is avoided, as is application too late, and therefore in fact application at a time when the crop has actually sprouted too far, with all the adverse consequences for quality, development etc. that this entails.

In a further preferred embodiment, the datum input in step c) can be a precipitation datum and/or an evaporation datum, in the case of which the processing unit determines a moisture balance from a difference between the precipitation datum and the evaporation datum. The moisture balance therefore expresses an increase or reduction of a moisture content of the soil. The processing unit can now on this basis provide a spray irrigation or watering instruction if the moisture balance indicates that a degree of evaporation could or does exceed a degree of precipitation. This means that the soil is prevented in a very timely way from drying out, since it is not necessary to wait in the usual way until a moisture content of the soil falls before proceeding to spray irrigate or water, but by making the system provide an instruction to irrigate on the basis of the moisture balance, the moisture content of the soil can already be influenced at a stage before the soil becomes too dry. This is particularly advantageous for promoting growth of the crop, since the moisture content of the soil determines a supply of nutrient materials (such as nitrogen) to the crop, since in general such a nutrient material is released for the benefit of the plant by micro-organisms in the soil, and activity of such micro-organisms generally depends on a moisture content of the soil. In addition, transfer mechanisms of the nutrients in the plant itself are also dependent upon a supply of water, since it is generally a matter of water-soluble constituents here. When an irrigation instruction is being determined, a root colour can also be taken into consideration, since this can provide an early indication of a necessary quantity of moisture.

In a preferred embodiment the datum input in step c) comprises one or more of the following: a yield of the crop, a measure for deviations in the harvested crop, and a shelf life of the harvested crop. As already described above, this enables the system to monitor whether such criteria, which are generally closely associated with the desired proposed use, are being achieved, and - as described above - a feedback can be arranged so that during the growth criteria are set in such a way that by such criteria a produce that meets demands of a user as regards yield, deviations, shelf life and the like is ultimately obtained.

In a preferred embodiment step d) comprises the provision of a growing recommendation on the basis of historic data relating to the yield, the deviations and the shelf life, in other words the system can provide a growing recommendation on the basis of historic data input in the database relating to a final result of the crop. For instance, if a user inputs data relating to the soil analysis of the piece of land and a desired growing objective, the system can provide a growing recommendation on the basis of the data present in the database, showing what varieties of the crop or what seed merchants, suppliers, planting material etc. provide material by means of which such a purpose has the greatest possible chance of being successfully achieved on the piece of land concerned. This can be performed by the system by comparing with historic data, and extrapolation or interpolation can also be applied, and a user of the system may if desired input further values or data gained from experience, in order to assist the system in arriving at such a recommendation.

During analysis of the piece of land it is also possible to input in the system what fruits, crops etc. have been grown on the same piece of land in previous years, should these data not be present in the system. These data can be included in an analysis of the piece of land. For instance, it may possibly emerge from historic data or input rules that where certain crops have been grown in previous years it is not a good idea to grow a different crop after that on the same piece of land, so that on the basis of such input rules or on the basis of historic data the system can then make a recommendation to grow a different crop or to perform various preparatory measures for the piece of land in order to increase the chance of success.

The system can be linked to a communications network for the transmission of data, it being possible for a plurality of output means that are linked via the network to the system to be present. Such output means can be, for example, a display unit such as a computer monitor, a mobile telephone or another mobile electronic means of communication or data processing device (such as a PDA, pocket computer etc.). The processing unit can break the instruction down into categories and, depending on category, send the instruction to a relevant output means via the communications network. It is, for example, possible for fertilizer application instructions for a group of pieces of land to be sent only to a user who is carrying out fertilizer applications for these pieces of land, while cultivation instructions (such as ploughing up) are sent only to another user (who is using a different output means) etc., so that a number of parties who are responsible only for specific actions relating to a piece of land can each be provided with the correct instructions at the right time. The network mentioned here can be, for example, a mobile network, a fixed telephone network or a data network, such as the internet or a private network or virtual private network.

The instruction can be provided to the user, but it is also possible for the instruction to be provided to a system or apparatus used for growing the crop, such as a sprayer unit, irrigation unit, soil cultivation unit, harvesting unit, planting/sowing unit etc., so that automated processing of the instruction and correct carrying out of said instruction can be achieved.

By means of the method according to the invention, which can be described as a method for growing a crop, comprising:
a) receiving a growing objective for the crop input by the user;
b) determining a criterion for growing the crop on the basis of at least the growing objective input in step a) and data stored in the database;
c) receiving a datum input by means of the input means relating to the state of the crop and/or the piece of land on which the crop is to be grown;
d) determining an instruction for achieving the criterion on the basis of the data stored in the database and the data input in step c); and
e) providing the instruction;
the same or similar effects can be achieved as those by means of the system described above, in the case of which the same or similar preferred embodiments as those described above relating to the system are possible.

Further advantages, features and characteristics of the invention will become clear from the appended drawing and the description that follows, which show a non-limiting exemplary embodiment, in which:
Fig. 1 shows a flow chart of a method according to the invention;
Fig. 2 shows a system according to the invention.

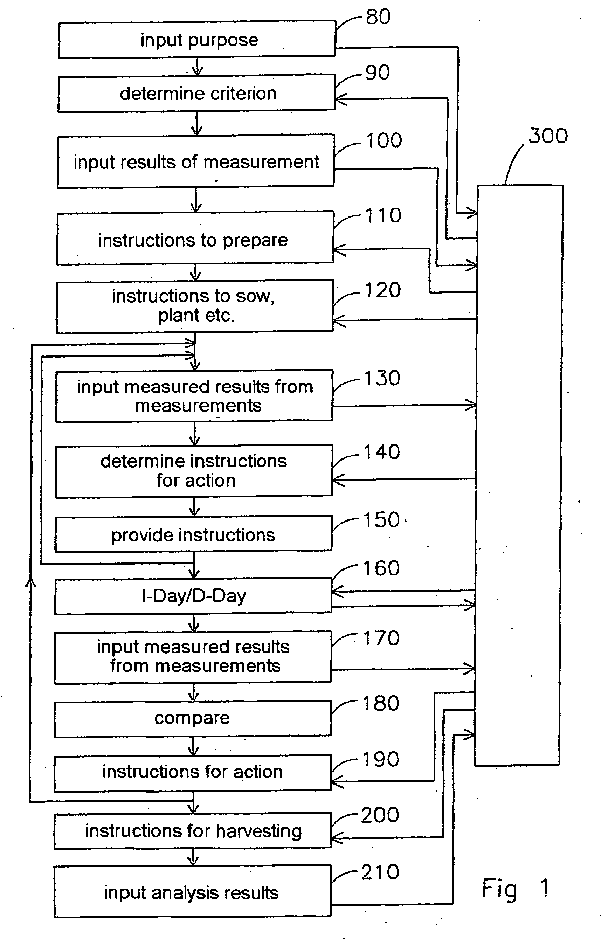

Figure 1 shows a flow chart of an example of a method according to the invention, in which 80, 90, 100, 110, 120, .., 190, 200 and 210 show steps in the method. In addition to the steps 100 - 200 shown, a memory 300 is also shown, arrows between the relevant steps 100 - 200 and the memory 300 in each case indicating symbolically a storage of data in the memory, namely by an arrow from the step concerned to the memory 300, as is the case, for example, for step 100, in the case of which, after measured results have been input, said measured results are stored in memory 300, while an arrow from the memory 300 to a step represents a provision of data from the memory to the step concerned, as is the case, for example, in step 110, where instructions to prepare the piece of land are determined on the basis of, inter alia, data stored in the database, for example historic data. Incidentally, these arrows should not be considered as limiting; in the case of, for example, step 110 it is possible that data may nevertheless be stored in the memory, and the instruction determined in step 110 can therefore also be stored in the memory, so that it can be used later to make it possible to trace what instructions are provided in the case concerned or, for example, to determine later a chance of success in connection with such instructions. While the arrows from and to the memory 300 thus represent storage or output of data from the memory, the arrows between individual steps from the steps 100 - 200 should be considered as arrows in a flow chart, in other words they indicate a succession of steps. For instance, after step 100 has been carried out, the next step is step 110, as indicated by the arrow between step 100 and step 110.

In the exemplary embodiment of the method described here, a purpose for the crop to be grown, such as a produce for an industrial mechanical processing operation, for a canning factory, for an organic crop, for sale in chain stores, for storage or export etc., is input in step 80. As shown by the arrow from 80 to memory 300, the input purpose is stored in the memory. In step 90 a criterion for growing the crop is then determined on the basis of the input purpose and data in the memory. For this, it is possible to use, for example, historic data in memory 300, on the basis of which it can be deduced what criteria or criterion must be met in order to achieve a yield of the crop that is suitable for the purpose concerned. A considerable differentiation can be achieved by determining the criterion partly on the basis of the purpose. For example, if the same crop is being used for different proposed uses, it is very conceivable and in practice very advantageous to take that into account when growing the crop concerned, which is achieved here by determining one or more criteria that have to be met during or after growing of the crop, depending on the purpose.

In this exemplary embodiment a result of a soil analysis for a piece of land is input in step 100, and the data obtained in this way, as represented by the arrow between step 100 and memory 300, are stored in the memory 300. An instruction to prepare the piece of land is then provided in step 110. For this purpose, the measured results input in step 100 and stored in the memory, which consequently indicate a current state of the piece of land, can be used, as can data stored in the memory relating to other pieces of land, historic data from, for example, earlier growth periods etc. The instructions for preparation can be, for example, a fertilizer application instruction or soil cultivation such as ploughing up, harrowing etc. The relevant instruction is then provided to the user in step 120.

A measured result or a number of measured results from one or more measurements is/are then input in step 130 and stored in memory 300. Such measurements can relate to a state of the crop and/or the piece of land itself. On the basis of the measurements and the criterion, it can then be determined to what extent an actual situation corresponds to a desired situation, by comparing the measurements with the criterion, for example, or comparing the measurements with historic measurements at an earlier time relating to the same piece of land or another piece of land, and the historic results derived from them that are stored in the memory. It is, of course, also possible for the criterion to comprise a growing profile or the like, so that, for example, an actual value such as that deduced or to be deduced from the measured data can be compared with what would be desired according to the growing profile concerned. As already described above, on this basis an instruction can be determined to contribute to reaching of the criterion, as is indicated in step 140. In determining the instruction, use can be made of the data stored in the database and/or the measured datum input in step 130 or earlier additional data stored in the memory 300, and also the criterion determined in step 90. The instruction can then be provided to the user, for example by means of output means. The steps 130, 140, 150 can be repeated periodically, for example weekly, or as often as is desirable according to a growth phase of the crop concerned. For instance, it is possible that at an early stage of the crop, for example shortly after or around the time of sowing, a daily run-through of steps 130, 140, 150 is desirable. This is desirable, for example, in order to be able to control conditions for germination or rooting of the crop concerned within narrow limits by means of the provision of suitable instructions for performing actions. In addition to the loop comprising steps 130, 140 and 150, a further loop can also be run through. If, for example, the profile contains a growth phase date or a finishing phase date around which the crop has to pass from a development phase to a growth phase or from the growth phase to a finishing phase respectively, further measurements can be performed on reaching such a moment in time, and these can be input as shown by step 170. These measurements are compared with desired results, such as would be desired on the growth phase date or finishing phase date concerned in order to be able to meet the growing objective concerned, and instructions can then be determined for monitoring further growth of the crop. For example, such an instruction can comprise applying additional fertilizer, an analysis of the plant or the soil, applying a growth inhibitor and/or a retarder, an instruction to prune or work mechanically on the crop in another way etc.

When cultivation of the crop has been completed in this way, an instruction to harvest can be given in step 200, in which case account can be taken of all kinds of measured data stored, for example, in the memory 300. Such data can comprise a development of the crop or measurements performed on the crop, but a weather forecast that is stored in the memory in a step not shown, or actual meteorological conditions that have been input in the memory can also play a part here. After an instruction to harvest as indicated by step 200, a further analysis 210 can be carried out. Various factors can be measured here, such as a yield of the crop, a size and variation in the size, a moisture content, a flavour, a shelf life, a waste percentage, a prevention of damage, blemishes or other factors that can have an effect on an appearance or a shelf life of the crop. Colour, a dry matter to nitrogen ratio, a calcium to potassium ratio or another chemical composition, volume and/or filling of the plant can also play a part.

Results of the analysis are stored in the memory 300. This makes it possible to perform an evaluation on the basis of such stored data, so, when a growing objective is being established for future crops, it can be determined, on the basis of data input earlier relating to analysis of earlier harvests, whether the desired growing objective could actually be achieved with the proposed measures, or otherwise it is possible, on the basis of the data input earlier, by means of suitable techniques (for example, selection, weighing up, interpolation, calculation of chances etc.) to suggest a suitable purpose and/or a suitable plant variety, seed merchant, breed etc., with respect to a crop on the piece of land concerned, in order to increase a chance of achieving a successful harvest in that way.

In addition to what is described with reference to Figure 1, many other variants of such a method can be produced in practice, and reference can be made here, for example, to one or more of the preferred embodiments of the invention described in this document.

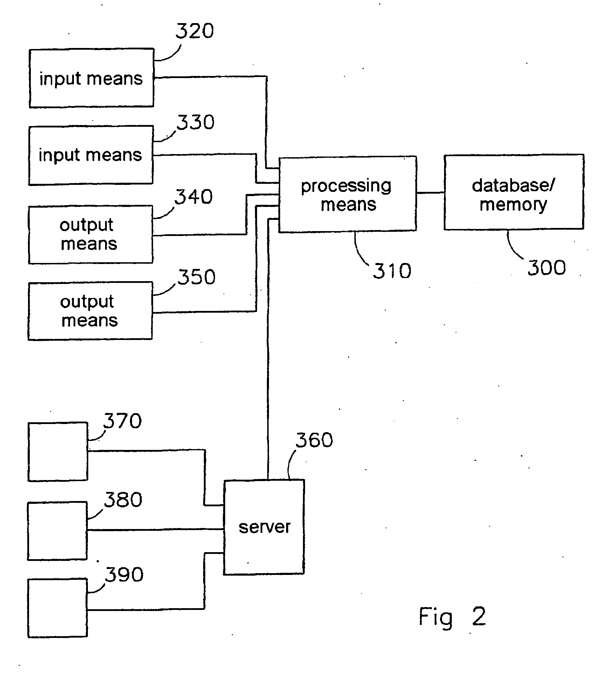

Figure 2 shows a block diagram in which a system according to the invention is shown very diagrammatically. Database 300 is linked here to a processing unit 310, which in turn is linked to a plurality of input means such as input means in 320, 330 for the input of data, and a plurality of output means, such as output means in 340, 350 for printing out data. Of course, it is also possible for combined input means and output means to be present.

The database 300 can comprise, for example, a semi-conductor memory, a magnetic memory such as a flexible or hard magnetic disk, an optical storage unit such as a DVD, CR-ROM, which is, for example, writable, or it can comprise any other optical storage unit. It is also possible for a plurality of memories or a plurality of storage units, which are physically present at a single location or otherwise, to form part of the database 300. The processing unit 310 can be a microprocessor, a microcontroller, a computer, a programmable logic controller (PLC), or any other data processing system. Of course, it is also possible for a plurality of such data processing systems to be incorporated in the processing unit, for example in order to increase processing capacity, or to increase reliability, so that if any of them fails, the functions can be taken over by others etc. Such data processing units can also be present at different physical locations, in order to keep within certain limits the load on a network by means of which data are transmitted between database, processing unit and input or output units. The input units can comprise a plurality of input units, for example computers or computer terminals, mobile telephones, laptops or notebooks, data analysis systems etc. Likewise, the output units can comprise a plurality of such means, such as a personal computer, notebook, laptop, mobile telephone, personal digital assistant (PDA) or other pocket computer, a printer or other printing unit etc. It is also possible for one or more of the input means or output means to be incorporated in an on-board computer or in another automation system of an agricultural vehicle; in this way, for example, instructions could be send to such an on-board computer, so that a driver of an agricultural vehicle concerned can be provided directly with instructions relating to the piece or pieces of land needing to be cultivated. The input means or output means can also comprise network servers, for example a web server with an internet connection. In this way, for example, data could be read into the system, for example metrological data supplied by a metrology service to such a server etc. The output means can also comprise, for example, an irrigation unit, so that the system, without the intervention of a user, can give direct instructions to irrigate to the control unit of the irrigation system concerned. It is also possible for input means, output means or combinations of these to be connected by means of a server, as shown in Fig. 2 to server 360, and to the input means/output means 370, 380 and 390. The input means/output means 370, 380 and 390 here can be, for example, computers, which are connected to server 360 by means of an internet connection. A user of the system can obtain an internet connection here to server 360 at a desired place by means of the computer 370, 380, 390, and then gain access by means of a password or other suitable identification procedure to data from the system and/or be given the possibility of inputting data. For instance, it is possible for a user to gain access to the data relating to the piece of land that is being cultivated by that user and to input data relating to said piece of land. The system and the method described in this document can be used, for example, for growing chicory, potatoes, onions or any other type of bulbs, tubers, roots, leaf crops or flowers. For growing onions, an induction date is used as an example of a growth phase date, which in climate conditions in the Netherlands is usually set at week 21, more particularly on 21 May. The finishing phase date applied here can be week 28 for climate conditions in the Netherlands, a date of 10 July preferably being applied. On the induction date criteria such as a daylight length of 16 hours, the presence of 3 to 4 leaves or other parameters for a vegetative phase (such as leaf growth, leaf mass, weight, chemical composition etc.) are applied. With regard to the finishing phase date, for onions criteria such as a presence of 8 to 9 leaves or other parameters for a generative phase can then be applied.

In the example of growing onions, daylight length e.g. can play a part, as can e.g. soil temperature, light intensity, day/night temperature etc. for determining a time of planting. It is also a specific feature for growing onions that one of the criteria that can be applied here is that in the case of 30 to 40% the number of coats of the onion at harvest must be leafless, since this criterion has been found to lead to a good, hard skin and the correct number of skins of the onion. By measuring such a criterion during the growing and sending it with correct instructions as to the abovementioned percentage, a quality, yield etc. of the crop can be influenced in a positive manner.

By means of the system and the method according to the invention, it is therefore possible to improve a growing process for growing a crop in such a way that a produce meets a predetermined marketing purpose with a high degree of reliability. In order to achieve this, data are input, the data are compared with historic data, rules etc. and then, on the basis of suitable techniques such as selection, interpolation, static analysis or other techniques that can be used in an expert system, one or more instructions are provided to the user to perform technical actions for the purpose of supporting the growth of the crop in such a way that there is a great chance of achieving the envisaged result for the envisaged marketing purpose.

## Claims

1. System for growing a crop, comprising:
- input means (320, 330) for inputting data relating to the growing of the crop,
- a database (300) in which to store input data,
- processing means (310) for generating an instruction on the basis of at least a part of the stored data and/or the input data, and
- output means (340, 350) for providing the instruction to a user of the system, the processing means being arranged to:
a) receive a growing objective for the crop (90) input by the user by means of the input means,
b) determine a criterion for growing the crop (90) on the basis of at least the growing objective and the data stored in the database (300);
c) receive data input by means of the input means relating to the state of the crop and/or the piece of land on which the crop is to be grown (100) ;
d) determine an instruction for achieving the criterion on the basis of the data stored in the database and the data input in step c) (110, 120, 140, 150); and
e) provide the instruction by means of the output means (150).

2. System according to claim 1, in which the growing objective comprises one or more of the following: a quantity of crop, a crop size, a bulb size, a fruit size, a proposed use, a harvesting date, a shelf life date, a flavour, a sugar content, a ripeness, a hardness, a colour, a chemical composition, food safety and environmental requirements.

3. System according to claim 1 or 2, in which the criterion comprises a growing profile of the crop over time.

4. System according to claim 3, in which the growing profile comprises a growth phase date, around which the crop has to pass from a development phase to a growth phase.

5. System according to claim 3 or 4, in which the growing profile comprises a finishing phase date, around which the crop has to pass from the growing phase to a finishing phase.

6. System according to one of claims 3 - 5, in which the growing profile is determined by the processing unit (310) on the basis of historic data stored in the database (300) relating to growth of the crop.

7. System according to one of the preceding claims, in which the data stored in the database (300) contain one or more historic data relating to:
the growth of the crop,
growing different varieties of the crop,
a soil type,
a soil analysis,
crops grown in previous times on a piece of land,
a fertilizer application on pieces of land on which the crop has been grown,
a weather condition,
instructions provided for achieving the criteria, and
an observation of the instructions provided.

8. System according to one of the preceding claims, in which a recommendation is provided on the basis of a soil analysis and the data stored in the database (300) on a variety of the crop that is suitable for the purpose concerned.

9. System according to one of the preceding claims, in which the steps b), c) and d) are repeated during growth of the crop.

10. System according to one of the preceding claims, in which the criterion comprises one or more of the following: a colour of at least a part of the crop, a number of leaves per plant, a leaf length, a leaf mass, a plant mass, a bulb weight, a bulb diameter, a number of roots, a root colour, a root mass, a level of longest vital leaves, a number of leafless coats, a number of leaf-bearing coats, a number of fruits, a number of spikes, a fruit mass, a spike mass, a fruit size and a spike size.

11. System according to one of the preceding claims, in which the instruction comprises one or more of the following: a sowing instruction, a planting instruction and an irrigation instruction for a period of four days after a sowing or planting.

12. System according to one of the preceding claims, in which the datum input in step b) comprises a soil analysis datum, comprising one or more of the following: a temperature, a moisture content, a texture, a structure, a chemical main and/or trace elements content, a carbon to nitrogen ratio, and a moisture balance.

13. System according to claim 12, in which the soil analysis datum comprises a fertilizer content, and in which the processing unit determines a fertilizer application instruction on the basis of the growing objective, the fertilizer content and historic data stored in the database.

14. System according to claim 13, in which the fertilizer application instruction comprises an instruction for an initial fertilizer application, an instruction for a fertilizer application around the growth phase date and an instruction for a fertilizer application around the finishing phase date.

15. System according to claim 13 or 14, in which the processing unit (310) determines the fertilizer application instruction by determining from the soil analysis datum a total available nitrogen content, determining from historic soil analysis data and/or fertilizer application data and the growing objective a desired total quantity of available nitrogen, and determining a fertilizer application instruction from the difference between the desired total quantity of available nitrogen and the soil analysis datum.

16. System according to claim 15, in which the initial fertilizer application comprises a predetermined part of the difference between the desired total quantity of available nitrogen and the total content of available nitrogen.

17. System according to one of the preceding claims, in which the datum input in step b) comprises a plant balance, and if a predetermined value of the plant balance is exceeded, the processing unit provides an instruction to apply an inhibitor.

18. System according to claim 17, in which the inhibitor comprises, a sprouting dormancy inhibitor.

19. System according to one of the preceding claims, in which the datum input in step b) comprises a plant balance, and in which on at least the basis of the plant balance and the development curve the processing unit determines an instruction to apply a growth stimulator if the plant balance is below a desired value, and to apply a growth inhibitor if the plant balance is above a desired value.

20. System according to claim 19, in which the growth stimulator comprises an amide nitrogen, preferably a urea.

21. System according to claims 18, 19 or 20, in which the growth inhibitor comprises a magnesium sulphate.

22. System according to one of claims 19 - 21, in which the instruction comprises applying a growth stimulator and a growth inhibitor.

23. System according to one of the preceding claims, in which the data input in step b) comprise a precipitation datum and an evaporation datum, the processing unit determines a moisture balance from a difference between the precipitation datum and the evaporation datum, and the processing unit provides a spray irrigation or watering instruction if the moisture balance indicates that a degree of evaporation exceeds a degree of precipitation.

24. System according to one of the preceding claims, in which the datum input in step b) comprises one or more of the following: a yield of the crop, a measure for deviations in the harvested crop, and a shelf life of the harvested crop.

25. System according to claim 24, in which step c) comprises the provision of a growing recommendation on the basis of historic data relating to the yield, the deviations and the shelf life.

26. System according to one of the preceding claims, in which the system is linked to a communications network for the transmission of data, a plurality of output means linked to the system via the network being present, and in which the processing unit sends the instruction depending on its category via the communications network to a relevant output means.

27. System according to one of the preceding claims, in which step d) comprises provision of the instruction to the user.

28. System according to one of the preceding claims, in which step d) comprises

29. Method for growing a crop, comprising:
a) receiving a growing objective for the crop input by the user (80);
b) determining a criterion for growing the crop (90) on the basis of at least the growing objective and data stored in the database
c) receiving an input datum relating to the state of the crop and/or the piece of land on which the crop is to be grown (100);
d) determining an instruction for achieving the criterion on the basis of the data stored in a database and the datum input in step c) (110, 120, 140, 190); and
e) providing the instruction (150).
provision of the instruction to an apparatus and/or a system used in growing the crop.

30. Method according to claim 29, in which the growing objective comprises one or more of the following: a quantity of crop, a crop size, a bulb size, a fruit size, a proposed use, a harvesting date, a shelf life date, a flavour, a sugar content, a ripeness, a hardness, a colour, a chemical composition, food safety and environmental requirements.

31. Method according to claim 29 or 30, in which the criterion comprises a growing profile of the crop over time.

32. Method according to claim 31, in which the growing profile comprises a growth phase date, around which the crop has to pass from a development phase to a growth phase.

33. Method according to claim 31 or 32, in which the growing profile comprises a finishing phase date, around which the crop has to pass from the growth phase to a finishing phase.

34. Method according to one of claims 31 - 33, in which the growing profile is determined on the basis of historic data stored in the database (300) relating to growth of the crop.

35. Method according to one of claims 29 - 34, in which the data stored in the database (300) comprise one or more historic data relating to:
the growth of the crop,
growing different varieties of the crop,
a soil type,
a soil analysis,
crops grown in previous times on a piece of land,
a fertilizer application to pieces of land on which the crop has been grown,
a weather condition,
instructions provided for achieving the criteria, and
an observance of the instructions provided.

36. Method according to one of claims 29 - 35, in which on the basis of a soil analysis and the data stored in the database, a recommendation is provided on a variety of the crop that is suitable for the purpose concerned.

37. Method according to one of claims 29 - 36, in which steps b), c) and d) are repeated during growth of the crop.

38. Method according to one of claims 29 - 37, in which the criterion comprises one or more of the following: a colour of at least a part of the crop, a number of leaves per plant, a leaf length, a leaf mass, a plant mass, a bulb weight, a bulb diameter, a number of roots, a root colour, a root mass, a level of longest vital leaves, youngest developed leaf, a number of leafless coats, a number of leaf-bearing coats, a number of fruits, a number of spikes, a fruit mass, a spike mass, a fruit size and a spike size.

39. Method according to one of claims 29 - 38, in which the instruction comprises one or more of the following: a sowing instruction, a planting instruction and an irrigation instruction for a period of four days after a sowing or planting.

40. Method according to one of claims 29 - 39, in which the datum input in step b) comprises one or more of the following: a temperature, a moisture content, a texture, a structure, a chemical main and/or trace elements content, a carbon to nitrogen ratio, and a moisture balance.

41. Method according to claim 40, in which the soil analysis datum comprises a fertilizer content, and in which a fertilizer application instruction is determined on the basis of the growing objective, the fertilizer content and historic data stored in the database.

42. Method according to claim 41, in which the fertilizer application instruction comprises an instruction for an initial fertilizer application, an instruction for a fertilizer application around the growth phase date and an instruction for a fertilizer application around the finishing phase date.

43. Method according to claim 41 or 42, in which the fertilizer application instruction is determined by determining from the soil analysis datum a total quantity of available nitrogen, determining from historic soil analysis data and/or fertilizer application data and the growing objective a desired total quantity of available nitrogen, and determining a fertilizer application instruction from a difference between the desired total quantity of available nitrogen and the soil analysis datum.

44. Method according to claim 43, in which the initial fertilizer application comprises a predetermined part of the difference between the desired total quantity of available nitrogen and the total content of available nitrogen.

45. Method according to one of claims 29 - 44, in which the datum input in step b) comprises a plant balance, and if a predetermined value of the plant balance is exceeded, the processing unit provides an instruction to apply an inhibitor.

46. Method according to claim 45, in which the inhibitor is a sprouting dormancy inhibitor.

47. Method according to one of claims 29 - 46, in which the datum input in step b) comprises a plant balance, and in which on at least the basis of the plant balance and the development curve the processing unit determines an instruction to apply a growth stimulator if the plant balance is below a desired value and to apply a growth inhibitor if the plant balance is above a desired value.

48. Method according to claim 47, in which the growth stimulator comprises an amide nitrogen, preferably a urea.

49. Method according to claim 47 or 48, in which the growth inhibitor comprises a magnesium sulphate.

50. Method according to one of claims 47 - 49, in which the instruction is to apply a growth stimulator and a growth inhibitor.

51. Method according to one of claims 29 - 50, in which the data input in step b) comprise a precipitation datum and an evaporation datum, in the case of which the processing unit determines a moisture balance from a difference between the precipitation datum and the evaporation datum, and in which a spray irrigation or watering instruction is provided if the moisture balance indicates that a degree of evaporation exceeds a degree of precipitation.

52. Method according to one of claims 29 - 51, in which the datum input in step b) comprises one or more of the following: a yield of the crop, a measure for deviations in the harvested crop, and a shelf life of the harvested crop.

53. Method according to claim 52, in which step c) comprises the provision of a growing recommendation on the basis of historic data relating to the yield, the deviations and the shelf life.

54. Method according to one of claims 29 - 53, in which data are transmitted by means of a communications network, and in which the instruction, depending on a category of said data, is sent to a relevant output means via the communications network.

55. Method according to one of claims 29 - 54, in which step d) comprises the provision of the instruction to the user.

56. Method according to one of claims 29 - 55, in which step d) comprises the provision of the instruction to an apparatus and/or a system used for the cultivation.

## Patentansprüche

1. System zum Züchten einer Pflanze, umfassend:
- Eingabemittel (320, 330) zum Eingeben von Daten, welche das Züchten der Pflanze betreffen,
- eine Datenbasis (300), in welcher Eingabedaten zu speichern sind,
- Verarbeitungsmittel (310) zum Erzeugen einer Anweisung auf der Grundlage von zumindest einem Teil der gespeicherten Daten und/oder der Eingabedaten, und
- Ausgabemittel (340, 350) zum Bereitstellen der Anweisung für einen Benutzer des Systems,
wobei die Verarbeitungsmittel ausgestaltet sind,
a) ein Züchtungsziel für die Pflanze, welches von dem Benutzer mittels der Eingabemittel eingegeben wird, zu empfangen (90);
b) ein Kriterium zum Züchten der Pflanze auf der Grundlage von zumindest dem Züchtungsziel und den in der Datenbasis (300) gespeicherten Daten zu bestimmen (90);
c) mittels der Eingabemittel eingegebene Daten zu empfangen, welche den Zustand der Pflanze und/oder des Grundstücks, auf welchem die Pflanze zu züchten ist betreffen (100);
d) eine Anweisung zum Erreichen des Kriteriums auf der Grundlage der in der Datenbasis gespeicherten Daten und der in Schritt c) eingegebenen Daten zu bestimmen (110, 120, 140, 150); und
e) die Anweisung mittels der Ausgabemittel bereitzustellen (150).

2. System nach Anspruch 1, wobei das Züchtungsziel eines oder mehrere der folgenden umfasst: eine Menge der Pflanze, eine Pflanzengröße, eine Knollengröße, eine Fruchtgröße, eine beabsichtigte Verwendung, ein Erntedatum, ein Haltbarkeitsdatum, einen Geschmack, einen Zuckergehalt, eine Reife, eine Härte, eine Farbe, eine chemische Zusammensetzung, Lebensmittelsicherheit- und Umweltanforderungen.

3. System nach Anspruch 1 oder 2, wobei das Kriterium ein Wachstumsprofil der Pflanze über der Zeit umfasst.

4. System nach Anspruch 3, wobei das Wachstumsprofil ein Wachstumsphasendatum umfasst, bei welchem die Pflanze von einer Entwicklungsphase zu einer Wachstumsphase überzugehen hat.

5. System nach Anspruch 3 oder 4, wobei das Wachstumsprofil ein Endphasendatum umfasst, bei welchem die Pflanze von einer Wachstumsphase zu einer Fertigstellungsphase überzugehen hat.

6. System nach einem der Ansprüche 3-5, wobei das Wachstumsprofil von der Verarbeitungseinheit (310) auf der Grundlage von in der Datenbasis (300) gespeicherten historischen Daten, welche das Wachstum der Pflanze betreffen, bestimmt wird.

7. System nach einem der vorhergehenden Ansprüche, wobei die in der Datenbasis (300) gespeicherten Daten ein oder mehrere historische Daten enthalten, welche betreffen:
das Wachstum der Pflanze,
Züchten unterschiedlicher Arten der Pflanze,
eine Bodenart,
eine Bodenanalyse,
Pflanzen, welche in vorhergehenden Zeiten auf einem Grundstück gewachsen sind,
eine Düngemittelanwendung auf Grundstücken, auf welchen die Pflanze gezüchtet wurde,
eine Wetterbedingung,
Anweisungen, welche zum Erreichen der Kriterien bereitgestellt wurden, und
eine Überwachung der bereitgestellten Anweisungen.

8. System nach einem der vorhergehenden Ansprüche, wobei eine Empfehlung auf der Grundlage einer Bodenanalyse und der in der Datenbasis (300) gespeicherten Daten für eine Art der Pflanze, welche für den betroffenen Zweck geeignet ist, bereitgestellt wird.

9. System nach einem der vorhergehenden Ansprüche, wobei die Schritte b), c) und d) während des Wachstums der Pflanze wiederholt werden.

10. System nach einem der vorhergehenden Ansprüche, wobei das Kriterium eines oder mehrere der folgenden umfasst: eine Farbe von zumindest einem Teil der Pflanze, eine Anzahl von Blättern pro Pflanze, eine Blattlänge, eine Blattmasse, eine Pflanzemasse, ein Knollengewicht, einen Knollendurchmesser, eine Anzahl von Wurzeln, eine Wurzelfarbe, eine Wurzelmasse, einen Pegel von längsten vitalen Blätter, eine Anzahl von blattlosen Hüllen, eine Anzahl von blatttragenden Hüllen, eine Anzahl von Früchten, eine Anzahl von Ähren, eine Fruchtmasse, eine Ährenmasse, eine Fruchtgröße und eine Ährengröße.

11. System nach einem der vorhergehenden Ansprüche, wobei die Anweisung eine oder mehrere der folgenden umfasst: eine Sähanweisung, eine Pflanzanweisung und eine Bewässerungsanweisung für eine Dauer von vier Tagen nach einem Sähen oder Pflanzen.

12. System nach einem der vorhergehenden Ansprüche, wobei die in Schritt b) eingegebene Größe eine Bodenanalysegröße umfasst, welche eine oder mehrere der folgenden umfasst: eine Temperatur, einen Feuchtigkeitsgehalt, eine Beschaffenheit, eine Struktur, einen Gehalt von chemischen Haupt- und/oder Spurenelementen, ein Kohlenstoff-zu-Stickstoff-Verhältnis und ein Feuchtigkeitsgleichgewicht.

13. System nach Anspruch 12, wobei die Bodenanalysegröße einen Düngergehalt umfasst und wobei die Verarbeitungseinheit eine Düngeranwendungsanweisung auf der Grundlage des Züchtungsziels des Düngergehalts und historischer in der Datenbasis gespeicherter Daten bestimmt.

14. System nach Anspruch 13, wobei die Düngeranwendungsanweisung eine Anweisung für eine anfängliche Düngeranwendung, eine Anweisung für eine Düngeranwendung um das Wachstumsphasendatum und eine Anweisung für eine Düngeranwendung um das Endphasendatum umfasst.

15. System nach Anspruch 13 oder 14, wobei die Verarbeitungseinheit (310) die Düngeranwendungsanweisung bestimmt, indem sie aus der Bodenanalysegröße einen gesamten verfügbaren Stickstoffgehalt bestimmt, aus historischen Bodenanalysedaten und/oder Düngeranwendungsdaten und dem Züchtungsziel eine gewünschte gesamte Menge von verfügbarem Stickstoff bestimmt, und eine Düngeranwendungsanweisung aus der Differenz zwischen der gewünschten gesamten Menge von verfügbarem Stickstoff und der Bodenanalysegröße bestimmt.

16. System nach Anspruch 15, wobei die anfängliche Düngeranwendung einen vorbestimmten Anteil der Differenz zwischen der gewünschten gesamten Menge von verfügbarem Stickstoff und dem gesamten Gehalt von verfügbarem Stickstoff umfasst.

17. System nach einem der vorhergehenden Ansprüche, wobei die in Schritt b) eingegebene Größe ein Pflanzengleichgewicht umfasst, und wobei, wenn ein vorbestimmter Wert des Pflanzengleichgewichts überschritten wird, die Verarbeitungseinheit eine Anweisung bereitstellt, einen Hemmstoff anzuwenden.

18. System nach Anspruch 17, wobei der Hemmstoff einen Keimruhe-Hemmstoff umfasst.

19. System nach einem der vorhergehenden Ansprüche, wobei die in Schritt b) eingegebene Größe ein Pflanzengleichgewicht umfasst, und wobei die Verarbeitungseinheit auf zumindest der Grundlage des Pflanzengleichgewichts und der Entwicklungskurve eine Anweisung bestimmt, um einen Wachstumsstimulator anzuwenden, wenn das Pflanzengleichgewicht unterhalb eines gewünschten Werts ist, und einen Wachstumshemmstoff anzuwenden, wenn das Pflanzengleichgewicht über einem gewünschten Wert ist.

20. System nach Anspruch 19, wobei der Wachstumsstimulator einen Amidstickstoff, vorzugsweise Harnstoff, umfasst.

21. System nach Anspruch 18, 19 oder 20, wobei der Wachstumshemmstoff ein Magnesiumsulfat umfasst.

22. System nach einem der Ansprüche 19-21, wobei die Anweisung ein Anwenden eines Wachstumsstimulators und eines Wachstumshemmstoffs umfasst.

23. System nach einem der vorhergehenden Ansprüche, wobei die in Schritt b) eingegebenen Daten eine Niederschlagsgröße und eine Verdunstungsgröße umfassen, wobei die Verarbeitungseinheit ein Feuchtigkeitsgleichgewicht aus einer Differenz zwischen der Niederschlagsgröße und der Verdunstungsgröße bestimmt, und wobei die Verarbeitungseinheit eine Sprühbewässerungs- oder Bewässerungsanweisung bereitstellt, wenn das Feuchtigkeitsgleichgewicht anzeigt, dass ein Grad von Verdunstung einen Grad von Niederschlag überschreitet.

24. System nach einem der vorhergehenden Ansprüche, wobei die in Schritt b) eingegebene Größe eine oder mehrere der folgenden umfasst: einen Ertrag der Pflanze, eine Messung für Abweichungen in der geernteten Pflanze und eine Haltbarkeit der geernteten Pflanze.

25. System nach Anspruch 24, wobei der Schritt c) die Bereitstellung einer Wachstumsempfehlung auf der Grundlage von historischen Daten umfasst, welche den Ertrag, die Abweichungen und die Haltbarkeit betreffen.

26. System nach einem der vorhergehenden Ansprüche, wobei das System mit einem Kommunikationsnetz für die Übertragung von Daten verbunden ist, wobei mehrere Ausgabemittel vorhanden sind, welche über das Netz mit dem System verbunden sind, und wobei die Verarbeitungseinheit die Anweisung in Abhängigkeit von ihrer Kategorie über das Kommunikationsnetz zu einem relevanten Ausgabemittel sendet.

27. System nach einem der vorhergehenden Ansprüche, wobei der Schritt d) eine Bereitstellung der Anweisung für den Benutzer umfasst.

28. System nach einem der vorhergehenden Ansprüche, wobei der Schritt d) ein Bereitstellen der Anweisung für eine Vorrichtung und/oder ein System, welche beim Züchten der Pflanze verwendet werden, umfasst.

29. Verfahren zum Züchten einer Pflanze, umfassend:
a) Empfangen eines Züchtungsziels für die Pflanze, welches von dem Benutzer eingegeben wird (80);
b) Bestimmen eines Kriteriums für ein Züchten der Pflanze (90) auf der Grundlage von zumindest dem Züchtungsziel und in der Datenbasis gespeicherten Daten,
c) Empfangen von Eingabedaten, welche den Zustand der Pflanze und/oder des Grundstücks, auf welchem die Pflanze zu züchten ist, betreffen (100);
d) Bestimmen einer Anweisung zum Erreichen des Kriteriums auf der Grundlage der in der Datenbasis gespeicherten Daten und der in Schritt c) eingegebenen Größe (110, 120, 140, 190); und
e) Bereitstellen der Anweisung (150).

30. Verfahren nach Anspruch 29, wobei das Züchtungsziel eines oder mehrere der folgenden umfasst: eine Pflanzemenge, eine Pflanzengröße, eine Knollengröße, eine Fruchtgröße, eine beabsichtigte Verwendung, ein Erntedatum, ein Haltbarkeitsdatum, einen Geschmack, einen Zuckergehalt, eine Reife, eine Härte, eine Farbe, eine chemische Zusammensetzung, Lebensmittelsicherheit- und Umweltanforderungen.

31. Verfahren nach Anspruch 29 oder 30, wobei das Kriterium ein Wachstumsprofil der Pflanze über der Zeit umfasst.

32. Verfahren nach Anspruch 31, wobei das Wachstumsprofil ein Wachstumsphasendatum umfasst, bei welchem die Pflanze von einer Entwicklungsphase zu einer Wachstumsphase überzugehen hat.

33. Verfahren nach Anspruch 31 oder 32, wobei das Wachstumsprofil ein Endphasendatum umfasst, bei welchem die Pflanze von der Wachstumsphase zu einer Fertigstellungsphase überzugehen hat.

34. Verfahren nach einem der Ansprüche 31-33, wobei das Wachstumsprofil auf der Grundlage von in der Datenbasis (300) gespeicherten historischen Daten, welche das Wachstum der Pflanze betreffen, bestimmt wird.

35. Verfahren nach einem der Ansprüche 29-34, wobei die in der Datenbasis (300) gespeicherten Daten eine oder mehrere historische Daten umfassen, welche betreffen:
das Wachstum der Pflanze,
Züchten unterschiedlicher Arten der Pflanze,
eine Bodenart,
eine Bodenanalyse,
Pflanzen, welche in vorhergehenden Zeiten auf einem Grundstück gewachsen sind,
eine Düngeranwendung auf einem Grundstück, auf welchem die Pflanze gezüchtet wurde,
eine Wetterbedingung,
Anweisungen, welche zum Erreichen der Kriterien bereitgestellt werden, und
eine Überwachung der bereitgestellten Anweisungen.

36. Verfahren nach einem der Ansprüche 29-35, wobei auf der Grundlage einer Bodenanalyse und der in der Datenbasis gespeicherten Daten eine Empfehlung für eine Art der Pflanze, welche für den beabsichtigten Zweck geeignet ist, bereitgestellt wird.

37. Verfahren nach einem der Ansprüche 29-36, wobei die Schritte b), c) und d) während des Wachstums der Pflanze wiederholt werden.

38. Verfahren nach einem der Ansprüche 29-37, wobei das Kriterium eines oder mehrere der folgenden umfasst: eine Farbe von zumindest einem Teil der Pflanze, eine Anzahl von Blättern pro Pflanze, eine Blattlänge, eine Blattmasse, eine Pflanzenmasse, ein Knollengewicht, einen Knollendurchmesser, eine Anzahl von Wurzeln, eine Wurzelfarbe, eine Wurzelmasse, einen Pegel von längsten vitalen Blättern, ein jüngstes entwickeltes Blatt, eine Anzahl von blattlosen Hüllen, eine Anzahl von blatttragenden Hüllen, eine Anzahl von Früchten, eine Anzahl von Ähren, eine Fruchtmasse, eine Ährenmasse, eine Fruchtgröße und eine Ährengröße.

39. Verfahren nach einem der Ansprüche 29-38, wobei die Anweisung eine oder mehrere der folgenden umfasst: eine Sähanweisung, eine Pflanzanweisung und eine Bewässerungsanweisung für eine Dauer von vier Tagen nach einem Sähen oder Pflanzen.

40. Verfahren nach einem der Ansprüche 29-39, wobei die in Schritt b) eingegebene Größe eine oder mehrere der folgenden umfasst: eine Temperatur, einen Feuchtigkeitsgehalt, eine Beschaffenheit, eine Struktur, einen Gehalt von chemischen Haupt- und oder Spurenelementen, ein Kohlenstoff-zu-Stickstoff-Verhältnis, und ein Feuchtigkeitsgleichgewicht.

41. Verfahren nach Anspruch 40, wobei die Bodenanalysegröße einen Düngergehalt umfasst, und wobei eine Düngeranwendungsanweisung auf der Grundlage des Züchtungsziels, des Düngergehalts und in der Datenbasis gespeicherter historischer Daten bestimmt wird.

42. Verfahren nach Anspruch 41, wobei die Düngeranwendungsanweisung eine Anweisung für eine anfängliche Düngeranwendung, eine Anweisung für eine Düngeranwendung bei dem Wachstumsphasendatum und eine Anweisung für eine Düngeranwendung bei dem Endphasendatum umfasst.

43. Verfahren nach Anspruch 41 oder 42, wobei die Düngeranwendungsanweisung bestimmt wird, indem aus der Bodenanalysegröße eine gesamte Menge von verfügbarem Stickstoff bestimmt wird, aus historischen Bodenanalysedaten und/oder Düngeranwendungsdaten und dem Züchtungsziel eine gewünschte gesamte Menge von verfügbarem Stickstoff bestimmt wird, und eine Düngeranwendungsanweisung aus einer Differenz zwischen der gewünschten gesamten Menge von verfügbarem Stickstoff und der Bodenanalysegröße bestimmt wird.

44. Verfahren nach Anspruch 43, wobei die anfängliche Düngeranwendung einen vorbestimmten Anteil der Differenz zwischen der gewünschten gesamten Menge von verfügbarem Stickstoff und dem gesamten Gehalt von verfügbarem Stickstoff umfasst.

45. Verfahren nach einem der Ansprüche 29-44, wobei die in Schritt b) eingegebene Größe ein Pflanzengleichgewicht umfasst, und wobei die Verarbeitungseinheit, wenn ein vorbestimmter Wert des Pflanzengleichgewichts überschritten wird, eine Anweisung bereitstellt, um einen Hemmstoff anzuwenden.

46. Verfahren nach Anspruch 45, wobei der Hemmstoff ein Keimruhe-Hemmstoff ist.

47. Verfahren nach einem der Ansprüche 29-46, wobei die in Schritt b) eingegebene Größe ein Pflanzengleichgewicht umfasst und wobei die Verarbeitungseinheit auf zumindest der Grundlage des Pflanzengleichgewichts und der Entwicklungskurve eine Anweisung bestimmt, um einen Wachstumsstimulator anzuwenden, wenn das Pflanzengleichgewicht unterhalb eines gewünschten Werts ist, und einen Wachstumshemmstoff anzuwenden, wenn das Pflanzengleichgewicht über einem gewünschten Wert ist.

48. Verfahren nach Anspruch 47, wobei der Wachstumsstimulator einen Amidstickstoff, vorzugsweise Harnstoff, umfasst.

49. Verfahren nach Anspruch 47 oder 48, wobei der Wachstumshemmstoff ein Magnesiumsulfat umfasst.

50. Verfahren nach einem der Ansprüche 47-49, wobei die Anweisung ist, einen Wachstumsstimulator und einen Wachstumshemmstoff anzuwenden.

51. Verfahren nach einem der Ansprüche 29-50, wobei die in Schritt b) eingegebenen Daten eine Niederschlagsgröße und eine Verdunstungsgröße umfassen, und wobei die Verarbeitungseinheit ein Feuchtigkeitsgleichgewicht aus einer Differenz zwischen der Niederschlagsgröße und der Verdunstungsgröße bestimmt, und wobei eine Sprühbewässerungs- oder Bewässerungsanweisung bereitgestellt wird, wenn das Feuchtigkeitsgleichgewicht anzeigt, dass ein Grad einer Verdunstung einen Grad eines Niederschlags überschreitet.

52. Verfahren nach einem der Ansprüche 29-51, wobei die in Schritt b) eingegebene Größe eine oder mehrere der folgenden umfasst: einen Ertrag der Pflanze, eine Messung für Abweichungen in der geernteten Pflanze und eine Haltbarkeit der geernteten Pflanze.

53. Verfahren nach Anspruch 52, wobei der Schritt c) das Bereitstellen einer Wachstumsempfehlung auf der Grundlage von historischen Daten umfasst, welche den Ertrag, die Abweichungen und die Haltbarkeit betreffen.

54. Verfahren nach einem der Ansprüche 29-53, wobei Daten mittels eines Kommunikationsnetzes übertragen werden, und wobei die Anweisung in Abhängigkeit einer Kategorie der Daten über das Kommunikationsnetz zu einem relevanten Ausgabemittel gesendet werden.

55. Verfahren nach einem der Ansprüche 29-54, wobei der Schritt d) das Bereitstellen der Anweisung für den Benutzer umfasst.

56. Verfahren nach einem der Ansprüche 29-55, wobei der Schritt d) das Bereitstellen von der Anweidung für eine Vorrichtung und/oder ein System, welche für die Kultivierung verwendet werden, umfasst.

## Revendications

1. Système de croissance d'une culture, comprenant :
- un moyen de saisie (320, 330) destiné à introduire des données relatives à la croissance de la culture ;
- une base de données (300) dans laquelle sont stockées des données saisies ;
- un moyen de traitement (310) pour générer une instruction sur la base d'au moins une partie des données stockées et/ou des données saisies ; et
- un moyen de sortie (340, 350) pour fournir l'instruction à un utilisateur du système ;
le moyen de traitement étant agencé de manière à :
a) recevoir un objectif de croissance de la culture (90) saisi par l'utilisateur au moyen du moyen de saisie ;
b) déterminer un critère pour la croissance de la culture (90) sur la base d'au moins l'objectif de croissance et les données stockées dans la base de données (300) ;
c) recevoir des données saisies par le biais du moyen de saisie, relatives à l'état de la culture et/ou de la parcelle de terre sur lequel la culture doit être cultivée (100) ;
d) déterminer une instruction pour atteindre le critère sur la base des données stockées dans la base de données et des données saisies à l'étape c) (110, 120, 140, 150) ; et
e) fournir l'instruction par le biais du moyen de sortie (150).

2. Système selon la revendication 1, dans lequel l'objectif de croissance comprend une ou plusieurs des caractéristiques suivantes : une quantité de culture, une taille de culture, une taille de bulbes, une taille de fruits, une utilisation envisagée, une date de récolte, une date de péremption, une saveur, une teneur en sucre, une maturité, une dureté, une couleur, une composition chimique, des exigences en matière d'environnement et de sécurité alimentaire.

3. Système selon la revendication 1 ou 2, dans lequel le critère comprend un profil de croissance de la culture au fil du temps.

4. Système selon la revendication 3, dans lequel le profil de croissance comprend une date de phase de croissance, autour de laquelle la culture doit passer d'une phase de développement à une phase de croissance.

5. Système selon la revendication 3 ou 4, dans lequel le profil de croissance comprend une date de phase de finition, autour de laquelle la culture doit passer de la phase de croissance à la phase de finition.

6. Système selon l'une quelconque des revendications 3 à 5, dans lequel le profil de croissance est déterminé par l'unité de traitement (310), sur la base de données historiques stockées dans la base de données (300), relatives à la croissance de la culture.

7. Système selon l'une quelconque des revendications précédentes, dans lequel les données stockées dans la base de données (300) contiennent une ou plusieurs données historiques relatives à :
la croissance de la culture ;
la croissance de différentes variétés de la culture ;
un type de sol ;
une analyse de sol ;
les produits cultivés antérieurement sur une parcelle de terre ;
une application d'engrais sur des parcelles de terre sur lesquelles la culture a été cultivée ;
une condition météorologique ;
les instructions fournies pour atteindre les critères ; et
une observation des instructions fournies.

8. Système selon l'une quelconque des revendications précédentes, dans lequel une recommandation est faite sur la base d'une analyse de sol et des données stockées dans la base de données (300) sur une variété de la culture qui est appropriée pour l'application concernée.

9. Système selon l'une quelconque des revendications précédentes, dans lequel les étapes b), c) et d) sont répétées au cours de la croissance de la culture.

10. Système selon l'une quelconque des revendications précédentes, dans lequel le critère comprend un ou plusieurs des critères ci-après : une couleur d'au moins une partie de la culture, un nombre de feuilles par plante, une longueur de feuille, une masse de feuille, une masse végétale, un poids de bulbe, un diamètre de bulbe, un nombre de racines, une couleur de racine, une masse racinaire, un niveau des plus longues feuilles vitales, un nombre de couches de feuilles, un nombre de couches supportant des feuilles, un nombre de fruits, un nombre d'épis, une masse de fruit, une masse d'épi, une taille de fruit et une taille d'épi.

11. Système selon l'une quelconque des revendications précédentes, dans lequel l'instruction comprend une ou plusieurs des instructions ci-après : une instruction d'ensemencement, une instruction de repiquage et une instruction d'irrigation pendant une période de quatre jours après un ensemencement ou un repiquage.

12. Système selon l'une quelconque des revendications précédentes, dans lequel les données saisies à l'étape b) comprennent des données d'analyse de sol, comprenant une ou plusieurs des caractéristiques ci-après : une température, une humidité, une texture, une structure, une teneur en éléments chimiques de base et/ou en oligoéléments, un rapport carbone-azote, et un équilibre hydrique.

13. Système selon la revendication 12, dans lequel les données d'analyse de sol comprennent une teneur en engrais, et dans lequel l'unité de traitement détermine une instruction d'application d'engrais sur la base de l'objectif de croissance, de la teneur en engrais et des données historiques stockées dans la base de données.

14. Système selon la revendication 13, dans lequel l'instruction d'application d'engrais comprend une instruction pour une application d'engrais initiale, une instruction pour une application d'engrais autour de la date de phase de croissance et une instruction pour une application d'engrais autour de la date de phase de finition.

15. Système selon la revendication 13 ou 14, dans lequel l'unité de traitement (310) détermine l'instruction d'application d'engrais en déterminant, à partir des données d'analyse de sol, une teneur en azote disponible totale, en déterminant à partir des données d'analyse de sol historiques et/ou des données d'application d'engrais et de l'objectif de croissance, une quantité totale souhaitée d'azote disponible, et en déterminant une instruction d'application d'engrais à partir de la différence entre la quantité totale souhaitée d'azote disponible et les données d'analyse de sol.

16. Système selon la revendication 15, dans lequel l'application d'engrais initiale comprend une partie prédéterminée de la différence entre la quantité totale souhaitée d'azote disponible et la teneur totale en azote disponible.

17. Système selon l'une quelconque des revendications précédentes, dans lequel les données saisies à l'étape b) comprennent un équilibre végétal, et si une valeur prédéterminée de l'équilibre végétal est dépassée, l'unité de traitement fournit une instruction visant à appliquer un inhibiteur.

18. Système selon la revendication 17, dans laquelle l'inhibiteur comprend un antigerminatif de pousses en dormance.

19. Système selon l'une quelconque des revendications précédentes, dans lequel les données saisies à l'étape b) comprennent un équilibre végétal, et dans lequel, au moins sur la base de l'équilibre végétal et de la courbe de développement, l'unité de traitement détermine une instruction visant à appliquer un stimulateur de croissance si l'équilibre végétal est inférieur à une valeur souhaitée, et à appliquer un inhibiteur de croissance si l'équilibre végétal est supérieur à une valeur souhaitée.

20. Système selon la revendication 19, dans lequel le stimulateur de croissance comprend un azote amidique, de préférence une urée.

21. Système selon les revendications 18, 19 ou 20, dans lequel l'inhibiteur de croissance comprend un sulfate de magnésium.

22. Système selon l'une quelconque des revendications 19 à 21, dans lequel l'instruction comprend l'application d'un stimulateur de croissance et d'un inhibiteur de croissance.

23. Système selon l'une quelconque des revendications précédentes, dans lequel les données saisies à l'étape b) comprennent des données pluviométriques et des données d'évaporation, l'unité de traitement détermine un équilibre hydrique à partir d'une différence entre les données pluviométriques et les données d'évaporation, et l'unité de traitement fournit une instruction d'arrosage ou d'irrigation par aspersion si l'équilibre hydrique indique qu'un degré d'évaporation excède un degré de pluviométrie.

24. Système selon l'une quelconque des revendications précédentes, dans lequel les données saisies à l'étape b) comprennent une ou plusieurs des caractéristiques ci-après : un rendement de la culture, une mesure des écarts dans la culture récoltée, et une durée de conservation de la culture récoltée.

25. Système selon la revendication 24, dans lequel l'étape c) comprend la fourniture d'une recommandation de croissance sur la base des données historiques relatives au rendement, aux écarts et à la durée de conservation.

26. Système selon l'une quelconque des revendications précédentes, dans lequel le système est relié à un réseau de communication en vue de la transmission de données, une pluralité de moyens de sortie reliés au système par l'intermédiaire du réseau étant présents, et dans lequel l'unité de traitement envoie l'instruction, en fonction de sa catégorie, par l'intermédiaire du réseau de communication, à un moyen de sortie pertinent.

27. Système selon l'une quelconque des revendications précédentes, dans lequel l'étape d) comprend la fourniture de l'instruction à l'utilisateur.

28. Système selon l'une quelconque des revendications précédentes, dans lequel l'étape d) comprend la fourniture de l'instruction à un dispositif et/ou à un système utilisé dans la croissance de la culture.

29. Procédé de croissance d'une culture, comprenant :
a) la réception d'un objectif de croissance de la culture saisi par l'utilisateur (80) ;
b) la détermination d'un critère pour la croissance de la culture (90) sur la base d'au moins l'objectif de croissance et de données stockées dans la base de données ;
c) la réception de données saisies relatives à l'état de la culture et/ou de la parcelle de terre sur lequel la culture doit être cultivée (100) ;
d) la détermination d'une instruction pour atteindre le critère sur la base des données stockées dans la base de données et des données saisies à l'étape c) (110, 120, 140, 190) ; et
e) la fourniture de l'instruction (150).

30. Procédé selon la revendication 29, dans lequel l'objectif de croissance comprend une ou plusieurs des caractéristiques suivantes : une quantité de culture, une taille de culture, une taille de bulbes, une taille de fruits, une utilisation envisagée, une date de récolte, une date de péremption, une saveur, une teneur en sucre, une maturité, une dureté, une couleur, une composition chimique, des exigences en matière d'environnement et de sécurité alimentaire.

31. Procédé selon la revendication 29 ou 30, dans lequel le critère comprend un profil de croissance de la culture au fil du temps.

32. Procédé selon la revendication 31, dans lequel le profil de croissance comprend une date de phase de croissance, autour de laquelle la culture doit passer d'une phase de développement à une phase de croissance.

33. Procédé selon la revendication 31 ou 32, dans lequel le profil de croissance comprend une date de phase de finition, autour de laquelle la culture doit passer de la phase de croissance à la phase de finition.

34. Procédé selon l'une quelconque des revendications 31 à 33, dans lequel le profil de croissance est déterminé sur la base de données historiques stockées dans la base de données (300), relatives à la croissance de la culture.

35. Procédé selon l'une quelconque des revendications 29 à 34, dans lequel les données stockées dans la base de données (300) contiennent une ou plusieurs données historiques relatives à :
la croissance de la culture ;
la croissance de différentes variétés de la culture ;
un type de sol ;
une analyse de sol ;
les produits cultivés antérieurement sur une parcelle de terre ;
une application d'engrais sur des parcelles de terre sur lesquelles la culture a été cultivée ;
une condition météorologique ;
les instructions fournies pour atteindre les critères ; et
une observation des instructions fournies.

36. Procédé selon l'une quelconque des revendications 29 à 35, dans lequel sur la base d'une analyse de sol et des données stockées dans la base de données, une recommandation est faite sur une variété de la culture qui est appropriée pour l'application concernée.

37. Procédé selon l'une quelconque des revendications 29 à 36, dans lequel les étapes b), c) et d) sont répétées au cours de la croissance de la culture.

38. Procédé selon l'une quelconque des revendications 29 à 37, dans lequel le critère comprend un ou plusieurs des critères ci-après : une couleur d'au moins une partie de la culture, un nombre de feuilles par plante, une longueur de feuille, une masse de feuille, une masse végétale, un poids de bulbe, un diamètre de bulbe, un nombre de racines, une couleur de racine, une masse racinaire, un niveau des plus longues feuilles vitales, la feuille développée la plus jeune, un nombre de couches de feuilles, un nombre de couches supportant des feuilles, un nombre de fruits, un nombre d'épis, une masse de fruit, une masse d'épi, une taille de fruit et une taille d'épi.

39. Procédé selon l'une quelconque des revendications 29 à 38, dans lequel l'instruction comprend une ou plusieurs des instructions ci-après : une instruction d'ensemencement, une instruction de repiquage et une instruction d'irrigation pendant une période de quatre jours après un ensemencement ou un repiquage.

40. Procédé selon l'une quelconque des revendications 29 à 39, dans lequel les données saisies à l'étape b) comprennent une ou plusieurs des caractéristiques ci-après : une température, une humidité, une texture, une structure, une teneur en éléments chimiques de base et/ou en oligoéléments, un rapport carbone-azote, et un équilibre hydrique.

41. Procédé selon la revendication 40, dans lequel les données d'analyse de sol comprennent une teneur en engrais, et dans lequel une instruction d'application d'engrais est déterminée sur la base de l'objectif de croissance, de la teneur en engrais et des données historiques stockées dans la base de données.

42. Procédé selon la revendication 41, dans lequel l'instruction d'application d'engrais comprend une instruction pour une application d'engrais initiale, une instruction pour une application d'engrais autour de la date de phase de croissance et une instruction pour une application d'engrais autour de la date de phase de finition.

43. Procédé selon la revendication 41 ou 42, dans lequel l'instruction d'application d'engrais est déterminée en déterminant, à partir des données d'analyse de sol, une teneur en azote disponible totale, en déterminant à partir des données d'analyse de sol historiques et/ou des données d'application d'engrais et de l'objectif de croissance, une quantité totale souhaitée d'azote disponible, et en déterminant une instruction d'application d'engrais à partir de la différence entre la quantité totale souhaitée d'azote disponible et les données d'analyse de sol.

44. Procédé selon la revendication 43, dans lequel l'application d'engrais initiale comprend une partie prédéterminée de la différence entre la quantité totale souhaitée d'azote disponible et la teneur totale en azote disponible.

45. Procédé selon l'une quelconque des revendications 29 à 44, dans lequel les données saisies à l'étape b) comprennent un équilibre végétal, et si une valeur prédéterminée de l'équilibre végétal est dépassée, l'unité de traitement fournit une instruction visant à appliquer un inhibiteur.

46. Procédé selon la revendication 45, dans lequel l'inhibiteur est un antigerminatif de pousses en dormance.

47. Procédé selon l'une quelconque des revendications 29 à 46, dans lequel les données saisies à l'étape b) comprennent un équilibre végétal, et dans lequel, au moins sur la base de l'équilibre végétal et de la courbe de développement, l'unité de traitement détermine une instruction visant à appliquer un stimulateur de croissance si l'équilibre végétal est inférieur à une valeur souhaitée, et à appliquer un inhibiteur de croissance si l'équilibre végétal est supérieur à une valeur souhaitée.

48. Procédé selon la revendication 47, dans lequel le stimulateur de croissance comprend un azote amidique, de préférence une urée.

49. Procédé selon la revendication 47 ou 48, dans lequel l'inhibiteur de croissance comprend un sulfate de magnésium.

50. Procédé selon l'une quelconque des revendications 47 à 49, dans lequel l'instruction consiste à appliquer un stimulateur de croissance et un inhibiteur de croissance.

51. Procédé selon l'une quelconque des revendications 29 à 50, dans lequel les données saisies à l'étape b) comprennent des données pluviométriques et des données d'évaporation, auquel cas l'unité de traitement détermine un équilibre hydrique à partir d'une différence entre les données pluviométriques et les données d'évaporation, et dans lequel une instruction d'arrosage ou d'irrigation par aspersion est fournie si l'équilibre hydrique indique qu'un degré d'évaporation excède un degré de pluviométrie.

52. Procédé selon l'une quelconque des revendications 29 à 51, dans lequel les données saisies à l'étape b) comprennent une ou plusieurs des caractéristiques ci-après : un rendement de la culture, une mesure des écarts dans la culture récoltée, et une durée de conservation de la culture récoltée.

53. Procédé selon la revendication 52, dans lequel l'étape c) comprend la fourniture d'une recommandation de croissance sur la base des données historiques relatives au rendement, aux écarts et à la durée de conservation.

54. Procédé selon l'une quelconque des revendications 29 à 53, dans lequel des données sont transmises par l'intermédiaire d'un réseau de communication, et dans lequel l'instruction, en fonction d'une catégorie desdites données, est envoyée à un moyen de sortie pertinent par l'intermédiaire du réseau de communication.

55. Procédé selon l'une quelconque des revendications 29 à 54, dans lequel l'étape d) comprend la fourniture de l'instruction à l'utilisateur.

56. Procédé selon l'une quelconque des revendications 29 à 55, dans lequel l'étape d) comprend la fourniture de l'instruction à un dispositif et/ou à un système utilisé pour la culture.
